Europäisches Patentamt

European Patent Office

Office européen des brevets

(11) Publication number: **0 407 982 A2**

# EUROPEAN PATENT APPLICATION

(21) Application number: 90113172.2

(22) Date of filing: 10.07.90

(51) Int. Cl.⁵: **F24C 15/32, A47J 39/00**

(30) Priority: 10.07.89 US 377177

(43) Date of publication of application:
16.01.91 Bulletin 91/03

(84) Designated Contracting States:
AT BE CH DE DK ES FR GB GR IT LI LU NL SE

(71) Applicant: KENTUCKY FRIED CHICKEN
CORPORATION
1441 Gardiner Lane
Louisville, Kentucky 40231(US)

(72) Inventor: Barkhau, Keith D.
4010 South Highway 393
LaGrange, Kentucky(US)
Inventor: Beltz, John D.
12603 Towne Creek Road
Louisville, Kentucky(US)
Inventor: Kupski, Donald R.
5317 Arrowshire Drive
LaGrange, Kentucky(US)
Inventor: Henke, Mitchell C.
5208 Oak Chase Run
Fort Wayne, Indiana(US)
Inventor: Svensson, Soldon A.

3639 Hopper Hill Road
Cincinnati, Ohio(US)
Inventor: Rao, Mohan
4411 Deepwood Drive
Louisville, Kentucky(US)
Inventor: Harlamert, Michael E.
3105 Dale Ann Drive
Louisville, Kentucky(US)
Inventor: Ash, Dennis
7609 Garrison Road, No. 7
Louisville Kentucky(US)
Inventor: Schonauer, Sylvia L.
8919 Bignham Drive
Louisville, Kentucky(US)
Inventor: MacGeorge, Gregory D.
2136 Glenworth Avenue
Louisville, Kentucky(US)

(74) Representative: Schmidt-Evers, Jürgen,
Dipl.-Ing. et al
Patentanwälte Mitscherlich, Gunschmann
Dr. Körber, Schmidt-Evers, Melzer, Dr. Schulz
Steinsdorfstrasse 10
D-8000 München 22(DE)

(54) Method and apparatus for simulating open flame broiled meat products.

(57) The specification discloses an apparatus for rapidly cooking meat products for a quick service restaurant which will simulate the appearance of an open flame broiled meat product. The meat product is clamped between a grill and a series of raised crown portions formed in a cooking pan. The cooking pan also includes rounded depressions which alternate with the upraised crowns to serve as reservoirs for the collection of fat and other rendered meat juices. The clamping action between the grill and the pan flattens the meat product having a range of product weight to a uniform thickness while simultaneously assuring conductive heat transfer from the crowns to the meat. The grill is pre-coated with a carmelizing agent which leaves grill marks on the meat product during the cooking cycle. The grill, meat product and pan can be conveyed through an air impingement oven having a plurality of heated high velocity air jets which impinge on the meat product, displace a food product boundary layer of cool air, and evenly heat the irregular surface of the meat product as it passes through the jets. Alternatively, the grill, meat product and pan are loaded into a convection oven having means for creating heated high velocity convecting air which contacts the meat product, displace a food product boundary layer of cool air, and evenly heat the irregular surface of the meat product as heated air passes over it.

FIG. 2

# METHOD AND APPARATUS FOR SIMULATING OPEN FLAME BROILED MEAT PRODUCTS

The present invention is intended for use in quick service restaurants to automatically and uniformly cook meat products in a manner which will simulate the appearance and texture of meat products that are individually broiled over an open flame.

Open flame broiled cooking is highly desirable for meat products sold for public consumption, and such products have won wide customer acceptance based on their aesthetic appearance and taste to the palate.

Open flame cooking however requires constant and full time attention by a cook, and frequently results in meat products that are overdone in the thinner portions, and underdone in thicker portions. While this can be regulated to some extent by the thickness of the cut in beef products, it is difficult, if not impossible to achieve when broiling chicken or other irregularly shaped pieces of meat for sale to consumers. In particular, it is difficult to achieve in quick service restaurants which depend for the patronage on a uniformly prepared product that will appear visually the same and taste palatively the same each time the customer returns to the restaurant. With manual open flame cooking, this is difficult to achieve due to the differences in preferences by individual cooks or chefs, and at times, the work load imposed on a chef at peak lunch and dinner hours.

Therefore, there is currently a need in quick service restaurants for a method and apparatus which will rapidly and uniformly prepare meat products, particularly poultry products for consumption, wherein the product appearance simulates the appearance of an open flame broiled meat product.

U.S. Patent 3,707,145 to Anetsberger et al. discloses a convection oven capable of temperatures to produce pyrolysis therein. Structure includes a cooking compartment, an outer shell and a space therebetween for environmental air. Air is drawn by a fan to keep control mechanisms and the exterior of the oven cool.

U.S. Patent 2,243,137 discloses the use of fins to conduct heat to a meat product during cooking.

U.S. Patent 4,297,942 discloses the use of heated "branding rods" which mark the meat product while conveying the product through a radiant cooking zone.

U.S. Patent 2,895,406 discloses an apparatus to clamp bacon strips together in a vertical orientation, over a fat drainage trough to uniformly cook the bacon from both sides without turning same.

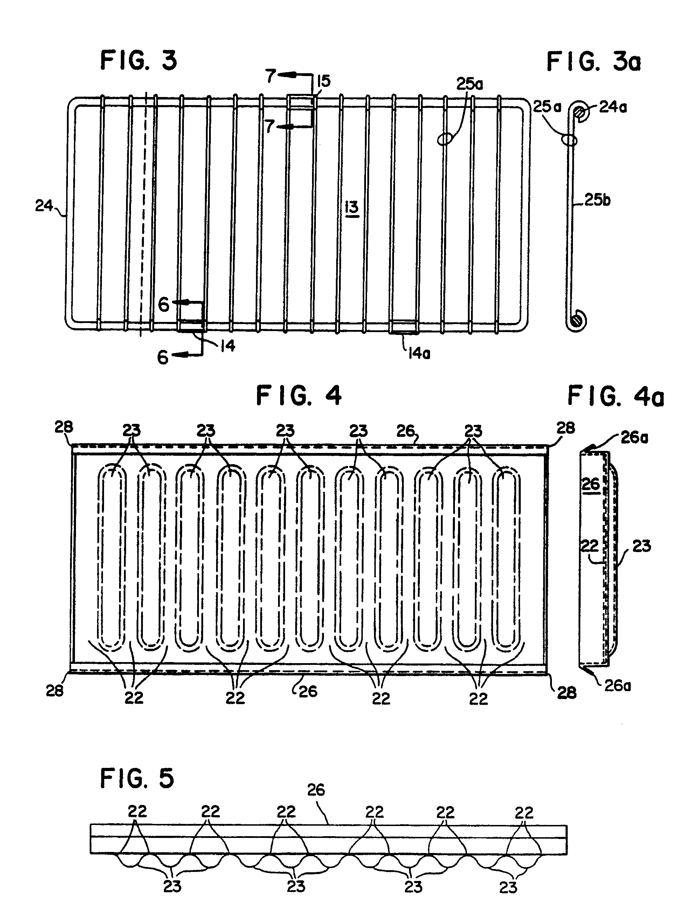

U.S. Patent 1,988,087 to Perone discloses an enclosed broiler, heated from below, which is best illustrated with respect to the present invention in Figures 4 and 5. A grill 15 is equipped with substantial upstanding ribs 16 which supports a meat product to be cooked 18, which is secured in place by means of a grill 20.

U.S. Patents 4,154,861 and 3,884,213 to Smith disclose air impingement ovens which utilize a plurality of perpendicularly directed high velocity jets of heated air that impinge against discrete points on the food surface to disrupt the boundary layer and thereby increase the rate of heat transfer into the product. By uniformly moving the food product through the air impingement over, it is possible to obtain even and thorough cooking, even on irregular surfaces of a food product.

U.S. Patent 4,375,184 discloses an apparatus for heating foods such as french fried potatoes which includes a pan 9, a high speed air heating source generated by a fan means 129, wherein the air passes through an open mesh grill 119 secured to the fan plenum.

U.S. Patents 685,342, 114,945, and 3,019,721 all disclose devices for facilitating the cooking of meat in a broiler or oven which include a pan or plate for receiving the meat, and a grill which overlies the meat at the time the product is prepared. In addition, the '945 patent and the '721 patent both disclose reservoirs for accumulating fat and meat juices expressed from the meat product during cooking.

U.S. Patents 1,772,171 and 1,903,324 both disclose devices which secure a product to be cooked between two grills which are clamped together, wherein the food product is heated from either side by radiant heat.

U.S. Patent 3,427,955 discloses a broiler pan having a series of upstanding flat surfaces 18 for receiving a meat product 24 to be cooked.

U.S. Patents 3,944,212 and 4,121,510 both disclose broiler pans having meat product support corrugations which extend transversely to the length of the pan.

The subject invention specifically relates to an apparatus for rapidly cooking meat products to simulate open flame broiling, said apparatus comprising a pan means for supporting a meat product to be cooked, said pan means having a series of elevated crowns for receiving and directly conducting heat from the pan to the meat product to be cooked, said crowns alternating with a plurality of reservoirs for collecting fat and juices from said meat products, a grill means overlying said meat product, said grill means releasably mounted on said pan to enable placement of said meat products to be cooked between said grill and said pan, said grill means effective upon mounting to said pan means, to clamp the meat to a predetermined thickness between the crowns of said pan and an underside of said grill means, and a heating means, said means directing heated air on or across said pan, grill and meat product.

The present invention further relates to a method for rapidly cooking poultry meat products to simulate open flame broiling, said method comprising coating a grill means with a carmelizing layer, clamping a poultry meat product between said coated grill means and a pan having an alternating series of crowns and reservoirs to provide a uniform meat thickness between the upper portion of said crowns and the coated side of said grill, uniformly cooking said poultry product by simultaneously directing heated air around or against the poultry product and heating said crowns to transfer heat to said poultry product by conduction, and collecting expressed juices and fat in a plurality of reservoirs formed in said pan.

The present invention thus provides a method and apparatus for rapidly and uniformly cooking meat products which simulates open flame broiling. A light weight aluminum pan mans having a series of elevated crowned portions for receiving and directly conducting heat from the pan to the meat product is used in combination with a grill means which is pre-coated with a browning agent to leave carmelized grill marks on the meat product as it is cooked. It is releasably secured to the pan and is effective to clamp the meat product between the grill and the pan to a predetermined thickness during cooking, to thereby aid in the uniformity of the cooking process. The pan, meat product and grill are conveyed through an air impingement oven by an open conveyer means which allows high velocity jets of heated air to impinge on the food product from above, and on the crowned portions of the aluminum pan from below. Alternatively, the pan, meat product and grill are placed in a high velocity air convection oven. Alternating with the crowned portions in the aluminum pan are indented reservoirs which serve to collect the fat and meat juices which are expressed by the meat product during cooking. This prevents the degradation of the texture, flavor and appearance of the meat product. During the residence time in the oven, the plurality of heated jets or the high velocity convecting hot air flow sweeps over the irregular surface of a poultry meat product to be cooked to break down the boundary layer of air which normally surrounds the food product. This results in rapid heat transfer to the food product. The air impingement jets or the convecting air flow removes water from the surface of the food product faster than moisture can migrate from the center towards the surface thereby browning or searing the surface of the food product without causing undesirable drying of the interior portions of the product. The combination of the char-grill pan and the air impingement or convection oven results in an improved product which is cooked in substantially less time than in conventional cook ovens and which results in a uniform product appearance which simulates the appearance of a flame broiled meat product. While the invention is equally applicable to all meat products, it is particularly useful for the simulation of open flame broiled poultry or chicken food products due to the irregular shape and configuration of these food products.

The present invention improves the consistency of both the visual appearance and the palatable taste of the food product from batch to batch as compared to manually tended open flame broiled poultry. The present invention further provides an apparatus which may be unattended during use, except for loading and unloading the oven with pre-assembled pans of meat products. The present invention significantly reduces the amount of labor involved in cooking poultry pieces by providing pre-assembled pans of chicken parts which may be stored in a refrigerated housing until immediately prior to cooking, thereby avoiding the time consuming step of individually placing and turning individual pieces of meat product on an open flame grill. The present invention also provides for pyrolytic self cleaning of the high velocity air convection oven.

Figure 1 is a diagrammatic front elevation view of an air impingement oven with a char-grill pan loaded with chicken parts passing therethrough.

Figure 2 is a cross-section view illustrating a side elevation of the apparatus illustrated in Figure 1 taken along section line 2-2'.

Figure 3 is a top elevation view of the grill utilized in the present invention.

Figure 3a is a side view of the grill illustrated in Figure 3 illustrating a portion thereof in cross-section.

Figure 4 is a top elevational view of the pan utilized in the air impingement oven.

Figure 4a is a side view of the pan illustrated in Figure 4.

Figure 5 is a side elevation view of the pan in Figure 4.

Figure 6 is a top plan view of the pan configured for use in a convection oven.

Figure 7 is a side view of the pan of Figure 6 illustrating a grill, pan and meat products clamped therebetween.

Figure 8 is a cross-section view of the pan illustrated in Figure 6 taken at section line A,A'.

Figure 9 is a cross-section view of the pan illustrated in Figure 6 taken at section line B,B'.

Figure 10 is a side view of a fixed clamp means used to secure the grill to the pan.

Figure 11 is a side view of a releasable clamp means utilized in the present invention which is used to releasably secure the grill to the pan.

Figure 12 is an enlarged diagrammatic view of the cross-section of the crowns and reservoirs formed in the pan illustrated in Figures 4 and 5.

Figure 13 is an enlarged diagrammatic view of the cross-section of the crowns and reservoirs formed in the pan illustrated in Figures 6, 8 and 9.

Figure 14 is an exploded diagram of the inner assembly of the convection oven.

Figure 15 is a front elevation of a two stacked convention oven illustrating the control module on the side thereof.

Figure 16 is an interior view of the cooking compartment of the convection oven illustrating the fan means, heating elements and conventional rack support members.

Figure 17 is a diagrammatic view illustrating the cooling air passageway used in the convection oven.

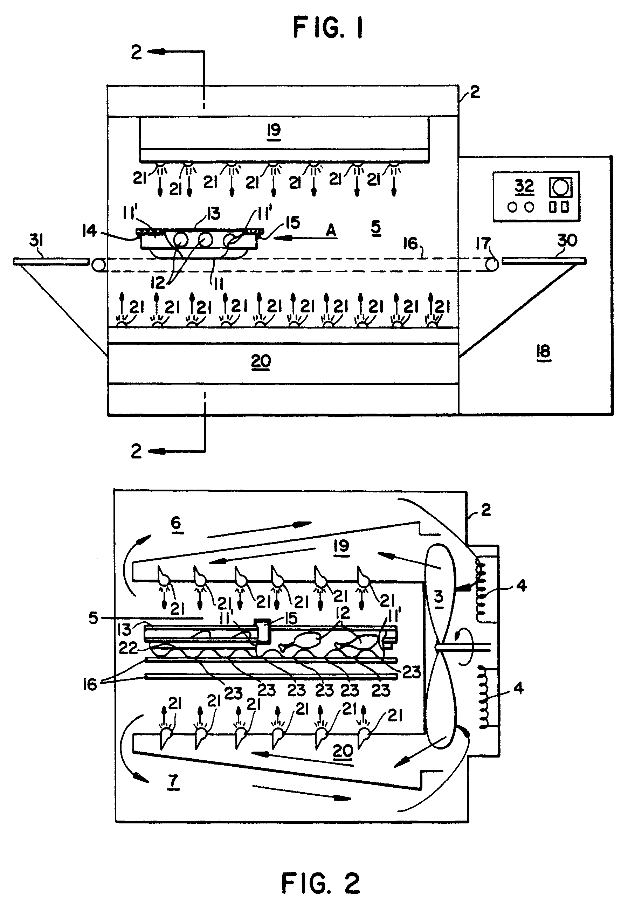

Figures 1 and 2 illustrate an apparatus for rapidly cooking meat products to simulate open flame broiling utilizing an air impingement oven. Figure 1 is a diagrammatic frontal view, and Figure 2 is a cross-section view taken along section lines 2-2' of Figure 1 which illustrate an air impingement oven and improved char-grill pan and grill for rapidly and uniformly cooking irregular meat food products such as poultry, chicken or the like. The air impingement oven includes a cabinet 2, a fan 3 for creating high pressure air, and heating means 4 which are illustrated in Figure 2 as electric heating elements. It is to be understood however that the electric elements may be replaced with gas jets if desired. Cabinet 2 is divided into a cooking zone 5, high pressure input plenums 19, 20 and return air plenums 6 and 7 which return the heat air to the fan means 3 for pressurizing the plenums 19 and 20. The amount of heat supplied to heating rods 4 may be altered by a control means 32 contained in cabinet 18 as desired achieve selected operating results. The control means 32 can also vary the conveyer speed, which regulates the residence time in the oven.

As illustrated in Figures 1 and 2 the present invention relates a pan means 11 which is partially broken away as indicated at 11' which supports a meat product 12 such as a chicken drum stick to be cooked. As will be hereinafter illustrated with respect to Figure 4 and 5, the pan has a series of elevated crowns 22 for receiving and directly conducting heat from the pan to the meat product to be cooked. The crowned portions alternate with a plurality of reservoirs 23 for collecting fat and juices expressed by the meat product during the cooking operation. A grill 13 overlies the meat product 12 and is releasably mounted to pan 11 by means of clamps 14, 15 which will be hereinafter further explained with respect to Figures 3, 10 and 11. The grill is removed from the pan during placement of the meat product, and when the pan is loaded for cooking, the grill is mounted to clamp the meat to a predetermined thickness between the crowns of the pan and the underside of the grill.

The apparatus is provided with a conveyer transport means 16 which is powered to drive shaft 17 and a motor (not shown) in the support housing 18. Conveyer means 16 is an open weave or open mesh stainless steel belt that allows the impingement jets from the lower portion of the oven to directly strike the crowns of the pan 11.

The invention further includes a heating means having a pair of plenums 19, and 20 arranged above and below the transport means 16 which have a plurality of nozzles 21 which generate a plurality of high velocity jets which impinge directly on the meat product 12 from above, and on the crowns of pan 11 from below. As the char-grill pan is transported through the impingement oven in the direction of the arrow A illustrated in Figure 1 the plurality of heated jets sweep both the surface of the meat product to be cooked and the underside of the flats of the pan to cook the meat product. In order to simulate the appearance of an open flame broiled product, it is necessary to brown or sear the surface of the meat product 12.

Browning or searing cannot be accomplished on the surface of a moist food product as long as moisture migration and evaporation keep the surface damp and cooler than the boiling temperature of the moisture. Rapid browning requires heating the product with the air jets to approximately 350° F while searing or grilling requires heating of the product surface to about 400° F or higher.

With the use of the air impingement oven, the air impingement jets exit the nozzles 21 at velocities of 1500-2500 feet per minute at a temperature of 400° F to 450° F to impinge against and sweep over the surface of the food product as it travels through the air impingement oven. This alternatively creates high and low pressure areas on the surface of the food product. Alternatively, in using the convection oven, the convecting hot air moves about the inner compartment at velocities of 800-1100 feet per minute at a temperature of 400-495° F to sweep over the surface of the food product as the hot air is circulated through the oven. Here, the preferred cooking temperature is 475° F. The progressive edges of the impinging jets or the convecting air removes the boundary layer of air which surrounds a cool food product and results in a rapid heat transfer to the product. The water is removed from the surface of the product faster than moisture can migrate from the center of the product towards the surface. This results in browning or searing without causing undesirable drying of the interior portions of the product.

In a normal oven, the temperature of the air heating the product can easily be more than twice the temperature of the boundary layer immediately adjacent to the product. Since the cool air is substantially denser than the heated air, there is a significant lag in the transfer of heat to the product to be cooked. Radiant heat, while penetrating the boundary layer, requires relatively high temperatures at the source of the radiation, which results in a substantially higher heat gradient between the surface of the food and the interior of the food. Thus as the surface browns from radiant heat, the brown and dried surface acts to inhibit further heat transfer to the interior of the food product. This forms an insulating layer which prevents the migration of moisture from within, while continuing to absorb heat and brown on the surface. For food products of relatively uniform cross-section, this temperature gradient can be adjusted to provide the desired cooking result in the meat product. However, for irregular food products such as drumsticks or chicken breast with wings, the smaller thinner portions of the meat product become overcooked by radiant cooking before the interior of the thicker portions of the product are properly cooked.

Both the air impingement oven and the convection oven, however, use a source air temperature which is substantially lower than the source temperature of a radiant heat source. This results in a milder and more controlled browning or crisping of the surface, and a more efficient heat transfer to the interior of the product.

In using the air impingement oven, the present invention can use both the air impingement cooking and conductive cooking to cook the meat product. The surfaces are cooked by the air impingement jets, while the pan transmits heat directly to the food product through heat conduction. As illustrated in Figure 2, the meat product 12 is clamped between grill 13 and the crowns 22 of pan 11. As illustrated in Figure 2, pan 11 again is illustrated in partial section with the portions at 11' being broken away to show the interior of the pan. Alternating between the crowns 22 of the pan are reservoirs 23 which collect fat and meat juices expressed or rendered from the meat product during the cooking operation. Because of the relatively high fat content of a meat product, it is not feasible to transport the meat product directly through an air impingement oven on conveyer 16 since the fat will collect on the upper surface of plenum 20 and create both a health and fire hazard. Initial tests of the air impingement oven with a meat product included the testing of the oven with a pan and a grill, with the grill supporting the meat product in a conventional manner. The pan collected the fat and expressed juices, but also blocked effective heating of the meat product from underneath, resulting in a piece that was pale and underdone on the bottom thereof.

Following the initial test, a herringbone corrugated pan having a surface configuration similar to that illustrated in U.S. Patent 4,121,510 was then tested. The V-shaped configuration provided a reservoir for the collection of fats and juices which would otherwise have ruined the texture of the meat if the meat had been allowed to lie in the fat during cooking. Tests of the herringbone design again resulted in a food product that was underdone or not completely cooked and was pale on the underside. Several alternate pan designs were then tested, many of which had additional problems with rigidity, strength, the rate of heat transfer, or allowing the fat to come into contact with the food product during the cooking operation. The final design of the pan provides significant contact portions 22 which permit direct conductive heat transfer into the food product to be cooked, with spaced alternating rounded V-shaped reservoirs 23 which collect the fat and juices expressed during the cooking thereof. In addition, the grill 13 is used to clamp the food product 12 to the crowned contact areas and thereby provide conductive heat transfer and a relatively uniform cross-section for more consistent internal cooking of the meat product. The clamping action of the grill deforms the meat product to be cooked, and urges it into contact along the upper portion of the crowns to maximize conductive heat transfer. The contour of the crowns enables the juices and fats to be more easily collected in the reservoirs 23. In one test between the pan design illustrated in Figures 4 and 5, and a conventional herringbone pan, a chicken meat product was cooking in each pan side-by-side under the same conditions and the final product compared. The pan illustrated in Figures 4 and 5 produced aesthetically pleasing product with piece internal temperatures of 190° to 210° F, and with the proper color and doneness. The herringbone pan design however, produced a product with internal temperatures of 165° F to 190° F, which was not completely cooked, and was pale on the underside.

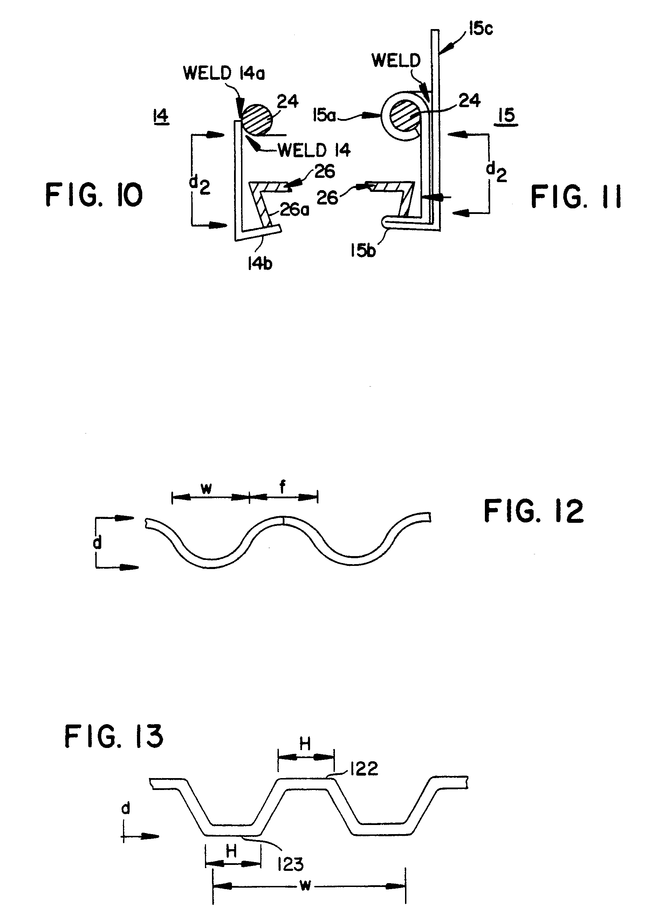

In addition to providing a uniform meat thickness, the grill means 13 also creates a method of generating burn marks on the surface of the meat product which emulates those created by open flame grilling. The top rack is roughened on the underside as indicated at 25(b) in Figure 3(a) and then coated with a browning agent which carmelizes during the cooking cycle leaving lines on the surface of the food product wherever the top rack has touched it. The carmelizing agent is dextrose which may be suspended in water or in cocoa butter for stick application. As illustrated in Figure 3, the grill 13 is constructed of a round 1/4 inch stainless steel perimeter rod 24 having a round cross-section as illustrated at 24a, and upon which is secured a series of quarter inch round cross-section stainless steel rods 25 as illustrated in cross-section at 25a. The round rods are secured by wrapping as illustrated in Figure 3(a), and may be further secured by welding if desired to eliminate grease entrapment cavities. The grill is clamped to the pan by means of clamp means 14, 14a and 15 which cooperate with a perimeter rib 26 formed on the exterior of pan 11. In the preferred embodiment of the present invention, pan 11 is formed from a single sheet of hardcoat anodized aluminum in a stamping operation which creates a series of rounded reservoirs 23 having a width w of approximately one inch as illustrated in Figure 12 and a depth d of approximately 1/2 inch (33/64 O.A.). The stamping process creates a series of crowns 22 as the metal is drawn to the lower most portion of the reservoir 23. The sides 27 of the pan 11 may be folded upwardly and the corners 28 are secured by welding. Alternatively, the ribs 26 may be formed as drawn beads in the stamping operation that forms the reservoirs 23. The upper side walls 27 are then folded outwardly and downwardly as indicated at 26a to form reinforcing ribs 26 on two sides of the perimeter of the pan. These ribs, together with the transverse orientation and spacing of the reservoirs 23 provide enhanced stability and rigidity for the pan as compared to a conventional herringbone or corrugated design. In the preferred embodiment, the hardcoat anodized aluminum is then coated with a "non-stick" fluoropolymer coating, such as Teflon® or sprayed SILVER STONE® to aid in the cleaning of the pan after each use.

The grill is clamped to the pan by clamps that are illustrated in Figures 3, 10 and 11 wherein Figure 10 illustrates the fixed clamps 14, 14a which secure the grill to one side of the pan, and Figure 11 illustrates a moveable clamp 15 which is clamped to the opposing side wall rib 26(a) after the meat product has been loaded. By adjusting the height of the side walls $d_1$ as illustrated in Figure 5, and the effective clamp length $d_2$ as illustrated in Figures 10 and 11, the grill will secure and flatten the meat product against the crowns 22 of the cooking pan 11. In construction, the clamp illustrated in Figure 10 is formed of a single bend of sheet stainless steel which is welded to the exterior perimeter rod 24 as indicated at 14a. The filling of the cavity with weld material also minimizes the amount of grease that can be trapped within the crevices. The single bend 14b extends inwardly and is secured against the lower most portion 26a of reinforcing rib 26. Depending upon the thickness of the meat product to be cooked, the underside of bars 25 may come into contact with the upper portion of the reinforcing rib 26. If thicker pieces of meat are to be cooked, then $d_2$ will be greater, and the grill will not actually contact the reinforcing ribs 26, or pan 11, except through clamps 14 and 15.

The releasable clamp 15 is formed of a single sheet which is multiply folded as illustrated in Figure 11 to provide a hinged engagement with perimeter rod 24 by virtue of the curve formed in the clamp as illustrated at 15a. The doubled over portion 15b provides a clamp for securing the grill to the perimeter rib 26, while the upstanding single thickness 15c provides a thumb release for engaging and disengaging the clamp from the perimeter of pan 11.

In the preferred embodiment of the invention, the pan and grill are 18 inches long and approximately 8 inches wide with a pan depth of 15/16 of an inch. Each of the reservoirs 23 is approximately one inch wide and each of the crowns has a distance f (illustrated in Figure 12) of 1 inch between reservoirs. This provides a center line to center line distance between the reservoirs of approximately 1 1/2 inches.

The combination of the pan configuration, the grill, and the air impingement oven creates a superior cooking apparatus which is able to significantly reduce the cook time required to cook a meat product, while simultaneously simulating the visual appearance and texture of an open flame broiled food product. Inasmuch as the transport through the air impingement oven is controlled by control means 32, the cooking is completely unattended, except for leading pans of food products to be cooked on support rack 30, as illustrated in Figure 1, and removing the finished product from finish rack 31.

The benefits of an air impingement oven in conjunction with a chargrill pan for producing a desirable meat product as disclosed above are numerous, however, in extended use, said oven is difficult to clean. Vaporous fat quickly coats the inside of the oven, requiring high temperature steam or caustic cleaning. As further described in the present invention, a second oven design which cleans itself by means of pyrolysis may also be used. Such an oven is substantially disclosed in U.S. Patent 3,707,145 to Anetsberger, et al.

In order for an oven to reach temperatures where pyrolysis takes place, it is necessary to seal off the cooking compartment. The air impingement oven described above cannot be sealed, and therefore cannot use pyrolysis for cleaning. When the doors of a convection oven used in the present invention are closed, the oven is sealed and temperatures of pyrolysis may be produced. Another concern relative to production of such high temperature is the external temperature of the oven relative to both the safety of personnel and the protection of control mechanisms for the oven. Therefore a space has been provided for the flow of cooler air from the environment between the cooking compartment and the outer cover for the oven. The passage of air in this compartment provides a "cool to the touch" feature for the outer cover of the oven and protects the control mechanisms from elevated temperatures.

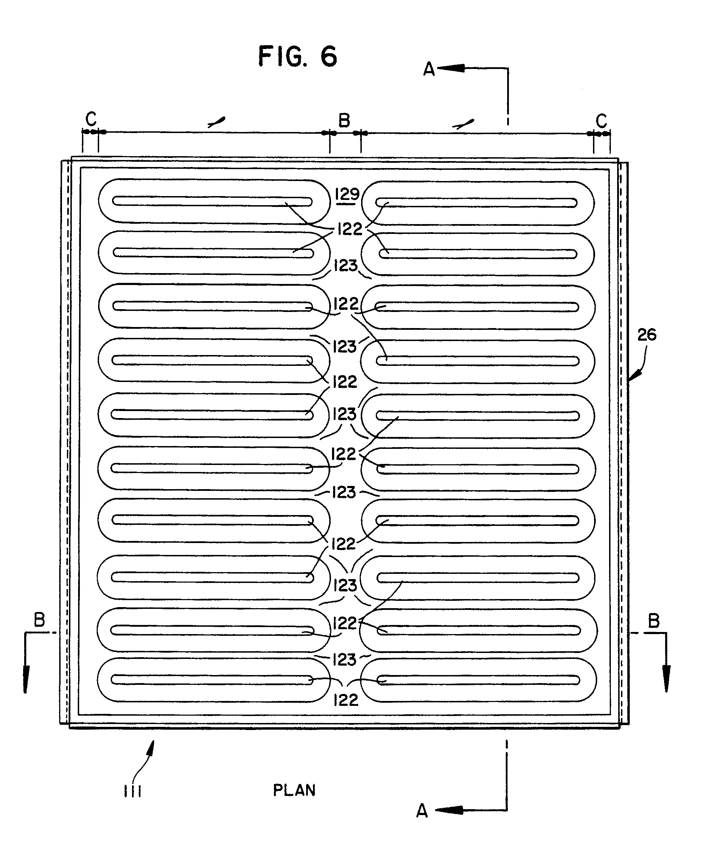

The chargrill pan described above has also been modified, to be used more efficiently in conjunction with the convection oven. The side walls of the pan have been altered, and the crown configuration has been altered to work more efficiently with a convection oven. Figures 6-11 and 13 illustrate the modified chargrill pan of the present invention.

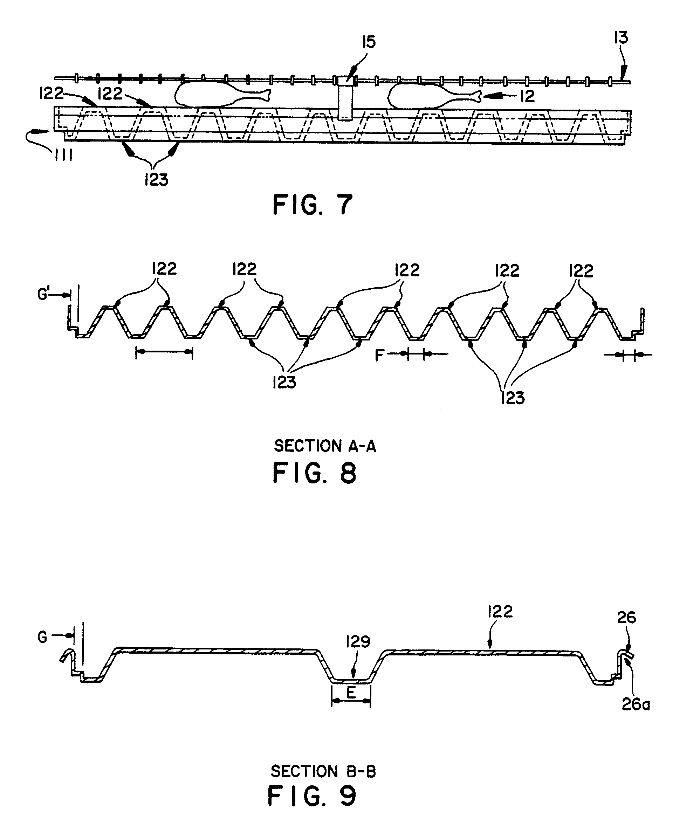

As illustrated in Figures 6-11 and 13, the pan comprises a chargrill pan 111 which supports a meat product, such as a chicken drum stick, to be cooked. As will be hereinafter illustrated with respect to Figures 8 and 9, the pan has two series of elevated crowns 122, separated by a trough 129, for receiving and directly conducting heat from the pan to the meat product to be cooked. The crowned portions alternate with a plurality of reservoirs 123, which feed into through 129, for collecting fat and juices expressed by the meat product during the cooking operation. As before, a grill 13 overlies the meat product 12 and is releasably mounted to the chargrill pan 111 by means of clamps 14, 15 which will be hereinafter further explained with respect to Figures 3, 10 and 11. As was stated above, the grill is removed from the pan during placement of the meat product, and when the pan is loaded for cooking, the grill is mounted to clamp the meat to a predetermined thickness between the crowns of the pan and the underside of the grill.

When the chargrill pan is in the convection oven the heated air sweeps both the surface of the meat product 12 to be cooked and the underside of the flats of the pan 111 to convect heat thereto, and thereby cook the meat product.

The convection oven uses air convection heating, and conductive heating from the pan to cook the meat product. In addition, there is some radiation from the walls of the cooking oven and the pan which assists in cooking the meat product. The surface of the meat product is cooked by the convecting hot air, while the pan transmits additional heat directly to the food product through heat conduction.

As illustrated in Figure 7, the meat product 12 is clamped between grill 13 and the crowns 122 of pan 111. The chargrill pan 111 is illustrated in side view with the interior of the pan shown by broken lines. Alternatively between the crowns 122 of the pan are reservoirs 123 which collect fat and meat juices expressed or rendered from the meat product during the cooking operation. Because of the relatively high fat content of a meat product, it is not feasible to cook the meat product directly in a convection oven since the fat will collect on the bottom surface of the inner compartment and create both a health and a fire hazard.

The final design of the pan used with the convection oven provides significant contact portions 122 which permit direct conductive heat transfer into the food product to be cooked, with spaced alternating truncated V-shaped reservoirs 123 which collect the fat and juices expressed during the cooking thereof. The grill 13 is used as before producing the same resulting aesthetically pleasing product, emulating those created by open flame grilling and with a uniform meat thickness.

In the preferred embodiment, the chargrill pan 111 is formed from a single sheet of hardcoat anodized aluminum in a stamping operation which creates a series of angular corrugated reservoirs 123 having a width H at their flat bottom portions of approximately one-quarter inch as illustrated in Figure 13 and a depth d of approximately one inch. The stamping process creates a series of crowns 122 as the metal is drawn to the upper most portion of the crowns 122. The side ribs 26 may be formed as illustrated in Figures 9-11, or as draw beads. The side of the pan extend only to the level of the ribs and no higher such that convecting air is not inhibited in reaching the meat product. The ribs, together with the transverse orientation and spacing of the reservoirs 123 again provide enhanced stability and rigidity for the pan as compared to conventional herringbone or corrugated design. A "non-stick" fluoropolymer coating can be used as before to aid in the cleansing of the pan after each use.

The grill is clamped to the pan similar to before as illustrated in Figures 3, 10 and 11. By adjusting the effective clamp length $d_2$ as illustrated in Figures 10 and 11, the grill may be adapted to any desired thickness of meat product, and will secure and flatten the meat product against the crowns 122 of the cooking pan 111 when clamped thereto.

In the preferred embodiment of the invention utilizing the convection oven, the pan and grill are 17 inches long and 16 1/2 inches wide with a pan depth of approximately one inch. As illustrated in Figures 8 and 9, the walls of the pan also stand one inch tall and are offset by 1/4 inch as indicated at 6 and 6′ from the bottom to the top of the wall. The two series of reservoirs 123 are divided by a trough 129 which is one inch side as indicated at E in Figure 9. Each of the reservoirs 123 and each of the crowns 122 has a flattened portion approximately 1/4" in width, as illustrated at H in Figure 13. There is center line distance between the reservoirs of approximately 1 5/8 inches, as indicated at W in Figure 13.

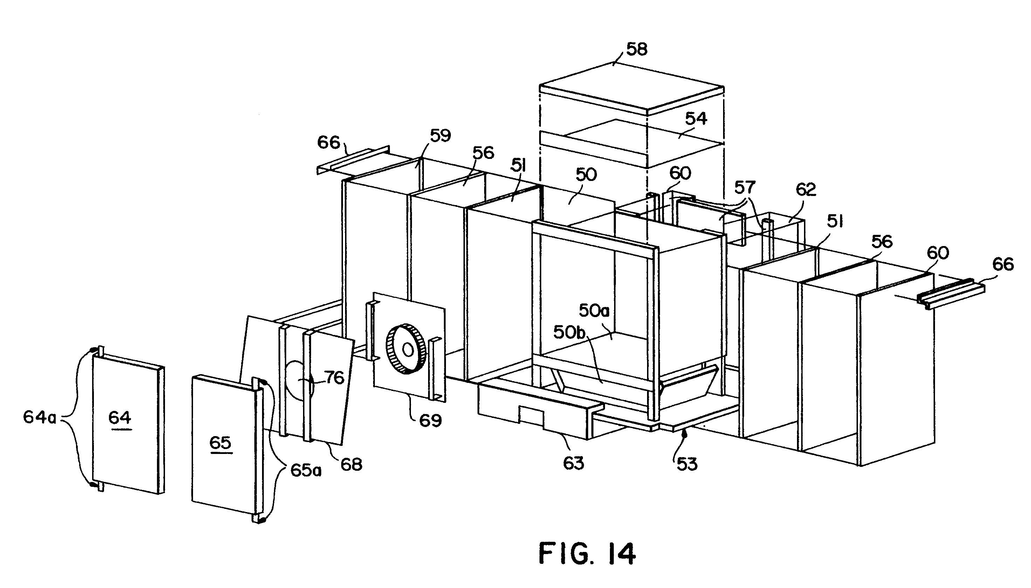

As illustrated in Figure 14, the convection oven of the present invention includes an inner cooking zone consisting of an inner housing assembly 50 which forms 4 sides of a cube, open on the front and bottom. A baffle 50a is attached by a plurality of latches to the inner housing 50 to form the bottom of the cube. A bottom pan 50b is arranged therebelow. Intermediate side walls 51, intermediate top wall 54, and base member 53, 50 are fixedly attached to the housing by welding. The remaining opening in the cube is the frontal access to the inner cooking zone.

Side insulation 56, rear insulation 57 and top insulation 58 are arranged around the intermediate walls of the inner cooking zone. The insulation serves both to retain heat inside the oven while also preventing the outside of the oven from becoming dangerously hot during pyrolysis. Right side and left side insulation covers 59 and 60, and rear insulation covers 60 and 62 retain the insulation in it's desired location. The upper edges of the insulation layers 56 are protected by top edge insulation covers, as illustrated at 66.

Figure 14 also illustrates a front insulation panel 63 and doors 64 and 65. The doors 64, 65 are mounted on pins 64a and 65a at their top ends and bottom ends, and attach to the oven to act as hinges so that the doors may be swung open. The doors may be either connected by cams such that upon opening one door the other will automatically open or they may be singly opened.

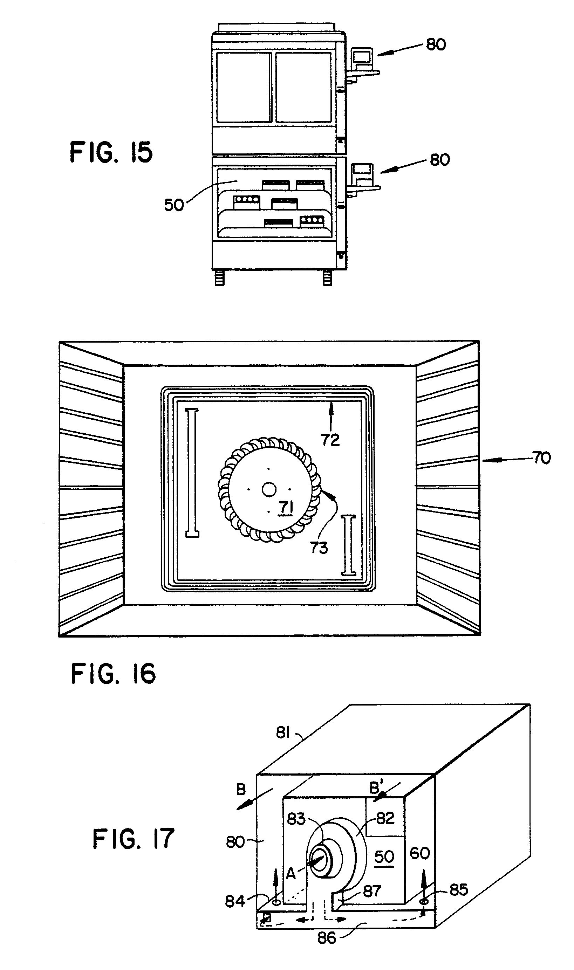

There is a further outer covering on the convection oven as illustrated in Figure 15-17 which is spaced equidistantly from the insulation covers 59-62 to create an interconnecting cooling passageway in which ambient air is propelled by a cooling fan means. The cooling passageway thus reduces the temperature of the outside of the oven during both the cooking operation and during the pyrolytic self cleaning cycle.

As illustrated in Figure 16, arranged within the interior of the inner cooking zone are several rack supports 70 mounted in a conventional manner. These rack supports hold a number of chargrill pans of this invention during the cooking cycle. At the rear of the cooking zone are a fan means and heating means 72 for creating high heated velocity convecting air. The cooking zone fan 73 is capable of withstanding temperature of up to 538°C (1000°F) which provides a safety margin for use during the pyrolytic cleaning cycle to be discussed later. The fan itself is 24cm in diameter, with 48 blades, each of which is 5cm wide, with a forward curve design. The fan rotates counter clockwise at a speed of 1725 rpm with a 60 hertz power supply (at 50 hertz power the rotation speed is diminished to 1450 rpm). The fan is rotated by a 560 w or 3/4 horsepower motor 83 illustrated from the rear in Figure 17. Baffle 68, illustrated in Figure 14, aids the fan in creating a uniform flow of air. The baffle 68 measures approximately 54cm x 60cm, has a hole 76 in its center, and is mounted at the rear of the housing immediately in front of the fan. The baffle directs incoming air through the central aperture 76 to the fan from the cooking zone and directs the air flow from the fan outwardly and around the periphery of the baffle thus creating a uniform air flow patter throughout the cooking area. The air flows in a cyclical pattern from the center of the oven into the fan means, past the heating means 72, out around the baffle along the periphery of the inner walls and back to the center of the oven. The airflow within the oven, over the chargrill racks of chicken, flows at 800 to 1100 fpm.

Further illustrated in Figure 16 is an electric heating element 72 which provides the heat for both cooking of the meat product and for pyrolytic self cleaning. it is to be understood, however, that gas or LPG (Liquid Propane Gas) barriers can be substituted for the electric element. Where electric heating elements are used, there are preferably 6 calrod heating elements, each rated at 1.83 kw. The heating elements are disposed in rectangular configuration around the cooking zone fan, between the baffle and inner rear wall. The heating means is designed to maintain a near constant 232°-257°C (450°-495°F) temperature for cooking, but yet be capable of reaching 440-455°C (825-850°F) for the pyrolytic self cleaning cycle. Temperature within the cooking zone is monitored and maintained by a computer attached module 80 illustrated in Figure 15.

Where gas is used as the source heat it is preferred to regulate the flow thereof to 8.64cm (3/4 inch) water column pressure. The preferred nozzle is a No. 25 orifice mounted on two cast iron atmospheric burners which in combination with the regulated gas flow delivers 33.7 kw of heat. The burners are disposed below the bottom baffle 50a of the inner cooking zone and the heat produced thereby is channeled through at least one flue which is formed in close proximity with at least one of the inner walls of the inner cooking zone. The heat flow therethrough is absorbed into the inner walls of the inner cooking zone and transmitted therethrough. The transmitted heat is then convected through the interior of the inner cooking zone by fan means 71.

During the pyrolytic (chemical decomposition from heat) self cleaning cycle the internal temperature of the oven reaches 440-455°C (825-850°F) and must remain at that temperature for 15-20 minutes. This puts a great deal of thermal stress on components such as the convection fan, motor control mechanism. The construction described herein takes into account the high temperature of pyrolysis and the detrimental effect it may have on the control, fan and motor necessary for the operation of the oven.

As illustrated in Figure 17, there is an interconnected space 80 between the inner cooking zone within the inner housing 50 and the outer cover 81. Disposed in this space at the rear of the oven is a second fan 82 which is connected to the same motor 83 and drive shaft as the convection fan 71 within the cooking zone. The second fan operates to draw cooler air from the surrounding environment, as indicated by arrow A, through the fan 82 and into duct 87. Duct 87 connects with a lower plenum 86 which extends under the oven and connects with passageway 80 through a plurality of openings, two of which are illustrated at 84 and 85. The cooling air then circulates upwardly along the walls of the inner chamber and is then expelled to the surrounding environment at the top thereof as illustrated by the arrows B,B′. This transient air is utilized to protect the control mechanism and fan motor for the oven, and also functions to maintain a lower exterior temperature for the oven which prevents injury to personnel who may contact the outer wall 81 during the pyrolysis cycle. This air does not however effect internal temperatures due to the insulation next to the inner walls of the oven. As another safety feature, there is provided a safety lock, which will not allow the doors to be opened when the internal temperature is above 260°- 288° C. This type of safety mechanism is known in the art.

As illustrated in Figure 15, in the preferred method of the present invention utilizing the convection oven, the chargrill pans are placed in the convection oven side by side and in alternating fashion by shelf. This provides for better air flow and therefore better cooking of the product.

The combination of the pan configuration, the grill, pan placement and the convection oven creates a superior cooking apparatus which is able to significantly reduce the cook time required to cook a meat product, while simultaneously simulating the visual appearance and texture of an open flame broiled food product. The convection oven also enjoys the additional benefit of self cleaning by pyrolysis. Since the temperature and airflow of the convection oven are controlled by control means 80 illustrated in Figure 15, the cooking is completely unattended, except for the loading and unloading of chargrill pans of food products from the support racks.

## Claims

1. Apparatus for rapidly cooking meat products to simulate open flame broiling, said apparatus comprising:

(a) pan means for supporting a meat product to be cooked, said pan means having a series of elevated crowns for receiving and directly conducting heat from the pan to the meat product to be cooked, said crowns alternating with a plurality of reservoirs for collecting fat and juices from said meat products.

(b) grill means overlying said meat product, said grill means releasably mounted on said pan to enable placement of said meat products to be cooked between said grill and said pan, said grill means effective upon mounting to said pan means, to clamp the meat to a predetermined thickness between the crowns of said pan and an underside of said grill means,

(c) a heating means, said means directing heated air on or across said pan, grill and meat product.

2. An apparatus according to Claim 1 wherein said heating means includes a plurality of high velocity jets of heated air which impinge on said pan, grill and meat product, and further includes transport means for moving said pan, grill and meat products through said heating means such that the plurality of heated jets sweep both the surface of the meat product to be cooked and the underside of the crowns of the pan during transport.

3. An apparatus according to Claim 1 wherein said heating means includes a convection fan means to direct high velocity heated air across said pan, grill and meat product and further includes enclosure means for confining said high velocity heated air and supporting said pan and grill means.

4. An apparatus according to Claim 2 wherein the transport means is an open conveyer belt which permits the impingement of said high velocity jets on the underside of the crowns of the pan during transport.

5. An apparatus according to Claim 2 wherein the velocity of said high velocity jets is between 1500 and 2500 fpm.

6. An apparatus according to Claim 3 wherein said heating means further includes a control means having a first predetermined temperature for cooking a meat product and a second predetermined temperature for pyrolytic self cleaning of said apparatus.

7. An apparatus according to Claim 3 wherein said high velocity heated air circulates from a center area of said cooking zone through said convection fan means, along an inner wall of said enclosure means, and across said pan, grill and meat product to the center of the cooking zone.

8. An apparatus according to Claim 3 which further includes an outer enclosure to define an air passageway between said outer enclosure and said enclosure means to channel transient air therebetween.

9. An apparatus according to Claim 3 wherein the velocity of said high velocity heated air is between 800 and 1100 fpm.

10. An apparatus according to any of the preceding claims wherein the pan means is formed with reinforcing ribs on the outer perimeter thereof.

11. An apparatus according to Claim 10 wherein the grill further includes a plurality of clamps for releasably engaging said reinforcing ribs.

12. An apparatus according to any of the preceding claims wherein said pan is formed with alternating transverse crowns and reservoirs which simultaneously strengthen said pan while forming collection reservoirs for the collection of expressed fats and juices from said meat product.

13. An apparatus according to Claim 12 wherein said indentations are formed with a truncated triangular cross section or rounded cross section.

14. An apparatus according to Claim 12 wherein said pan is formed of stamped aluminum.

15. An apparatus according to any of the preceding claims wherein said grill is coated with a carmelizing layer at the time said meat product is releasably clamped.

16. An apparatus according to Claim 12 wherein the pan means is formed of a fluoropolymer coated hardcoat anodized aluminum.

17. A method for rapidly cooking poultry meat products to simulate open flame broiling, said method comprising:

(a) coating a grill means with a carmelizing layer;

(b) clamping a poultry meat product between said coated grill means and a pan having an alternating series of crowns and reservoirs to provide a uniform meat thickness between the upper portion of said crowns and the coated side of said grill;

(c) uniformly cooking said poultry product by simultaneously:

(i) directing heating air around or against the poultry product; and

(ii) heating said crowns to transfer heat to said poultry product by conduction; and

(d) collecting expressed juices and fat in a plurality of reservoirs formed in said pan.

18. A method according to Claim 17 wherein said poultry product is uniformly cooked by transporting said pan, poultry product and grill past a plurality of heated air jets impinging against the poultry product, said air jets being heated to 400°F to 450°F with a velocity of 1500 to 2500 fpm.

19. A method according to Claim 17 wherein said poultry product is uniformly cooked by loading said pan, poultry product and grill into a heated air convection oven which circulates said heated air around the poultry product, said air being heated to 400°F to 495°F with a velocity of 800 to 1100 fpm.

# FIG. I

FIG. 2

EP 0 407 982 A2

FIG. 3

FIG. 3a

7 15

25a

24

13

25a 24a

25a

25b

6

14

6

14a

FIG. 4

FIG. 4a

28 23 23 23 23 26 23 28

26a

26

22 23

28 28

28 22 22 26 22 22 28

26a

FIG. 5

26

22 22 22 22 22 22

23 23 23 23

13

# FIG. 6

129
122
123
122
123
122
123
122
123
122
123
122
123
122

26

PLAN

111

FIG. 7

SECTION A-A

FIG. 8

SECTION B-B

FIG. 9

FIG. 10

FIG. 11

FIG. 12

FIG. 13

FIG. 14

EP 0 407 982 A2

FIG. 15

FIG. 16

FIG. 17